# EUROPÄISCHE PATENTANMELDUNG

(11) **EP 2 154 055 A2**
(43) Veröffentlichungstag der Anmeldung: **17.02.2010**
(21) Anmeldenummer: 09009395.6
(22) Anmeldetag: 20.07.2009
(51) Int. Cl.: B62H 5/00, B62H 5/20, E05B 67/06, E05B 67/24, E05B 67/38

(54) **Ringschloss und Seilschloss**

(30) Priorität: 31.07.2008 DE 102008035973
(71) Anmelder: RIXEN & KAUL GmbH, 42699 Solingen (DE)
(72) Erfinder: Flammann, Norbert, 42655 Solingen (DE)

(57) **Zusammenfassung**

Gezeigt ist ein Ringschloss (1, 2, 3) mit einem Schließkörper (4, 5, 6) mit einem Schließmechanismus (7, 8, 9) mit einem Schließriegel (10, 11, 12, 13) und mit einem Schlüssel (14, 15), sowie zwei Anschlussstellen (16, 17;18, 19; 20, 21) für Ringelementenden (22, 23; 24,25; 26, 27; 88, 89), weiterhin umfassend ein Ringelement (28, 29, 30, 96), mit zwei Enden (22, 23; 24,25; 26, 27; 88, 89), von denen mindestens eines durch den Schließmechanismus (7, 8, 9) mit Schlüssel (14, 15) lösbar ist und mit einer Handhabe (32, 33), die zur Entriegelung mindestens eines Ringelementendes (22, 24, 26) auf mindestens einen Riegel (10, 34, 35, 36) wirkt.

## Beschreibung

Die Erfindung betrifft ein Ringschloss mit einem Schließkörper mit einem Schließmechanismus mit einem Schließriegel und mit einem Schlüssel, sowie zwei Anschlussstellen für Ringelementenden, mit einem Ringelement mit zwei Enden, von denen mindestens eines durch den Schließmechanismus mit Schlüssel lösbar ist. Sie betrifft weiterhin im Speziellen ein Seilschloss mit einem Schließkörper mit einem Schließmechanismus darin, mit einem Schließriegel und mit einem Schlüssel, sowie zwei Anschlussstellen für Seilenden, und mit einem Seil mit zwei Enden, von denen mindestens eines durch den Schließmechanismus mit Schlüssel lösbar ist.

Die Erfindung betrifft insbesondere Bügelschlösser und Seilschlösser, sowie Gliederschlösser zur Sicherung von Fahrrädern.

Bei Bügelschlössern für Fahrräder ist der das Ringelement bildende Bügel üblicherweise ganz abnehmbar. Beide Enden des Bügels werden formschlüssig im Schließkörper verankert.

Bei Seilschlössern ist normalerweise ein Ende des das Ringelement bildenden Seiles dauerhaft am Schließkörper befestigt, wohingegen das zweite Seilende lösbar und schließbar ist. Es gibt jedoch auch Seilschlösser mit mehreren an einen Schließkörper anschließbaren Seilenden.

Gliederschlösser haben eine Struktur, die zwischen Bügel- und Seilschlössern liegt.

Ein gängiges Verständnis davon, wie derartige Schlösser funktionsmäßig gestaltet sein sollten, geht davon aus, dass sowohl der Schließvorgang als auch der Öffnungsvorgang des Schlosses nur mit Schlüssel möglich sein dürfen, damit der Besitzer von Fahrrad und Schloss, wenn er sein Fahrrad abschließt, zuverlässig auch seinen Schlüssel zur Hand hat, um die Möglichkeit, wieder aufschließen zu können, sicherzustellen.

Das hat den Nachteil, dass der Abschließvorgang mühselig ist, beide Hände und eine Menge Aufmerksamkeit erfordert.

In diesem Zusammenhang ist es bekannt, das komplette, gefügte Schloss in seiner Gesamtheit mit einer Schnellkupplung, am Fahrrad zu befestigen (DE9320765 U1). Diese Lösung ist vorteilhaft als Transportbefestigung des Schlosses am Fahrrad. Sie erspart das Suchen des Schlosses in irgendwelchen Gepäckstücken und verhindert das Klappern oder Herunterfallen des Schlosses während der Fahrt. Der Schließmechanismus ist in einem Gehäuse untergebracht, das auch eine Handhabe zum Lösen der Schnellkupplung umfasst.

Die Erfahrung zeigt, dass das Abschließen des Schlosses bzw. das Anschließen des Fahrrades an stabförmige, immobile Gegenstände, wie Laternen, Brückengitter etc. immer noch als lästig empfunden wird und deshalb häufig unterbleibt. Dann besteht die Gefahr, dass das nicht abgeschlossene Fahrrad gestohlen wird. Auch wenn es dem Dieb nichts nützt, ist zu befürchten, dass das nur mit der Schnellkupplung befestigte Schloss ohne Schlüssel gestohlen wird.

Der Erfindung liegt deshalb die Aufgabe zugrunde, das Abschließen eines Ringschlosses bzw. das Anschließen eines Fahrrades zu erleichtern. Die Lösung dieser Aufgabe ist im Anspruch 1 wiedergegeben. Damit wird erreicht, dass ein Fahrrad auch ohne Schlüssel abgeschlossen werden kann. Das Schloss hat eine alternative Schließung. Diese Alternativschließung erfolgt im Wechsel mit der Schlüssel-Schließung. Das setzt zwar voraus, dass der Benutzer des Ringschlosses eigenverantwortlich für die Erreichbarkeit des Schlüssels bei beabsichtigter Lösung des Ringschlosses sorgt, gestaltet den Abschließvorgang jedoch wesentlich komfortabler.

So wird sichergestellt, dass für den gesamten Prozess des Lösens der Transport-, Aufbewahrungs- oder Bereitschaftsverriegelung bis zum Abschluss des Schließvorganges kein Schlüssel benötigt wird.

Dabei ist vorgesehen, dass mindestens ein Riegel im Schließkörper als federbelasteter Schnappriegel ausgebildet ist. Das erlaubt es, den Schließmechanismus des Schlosses ohne zusätzliche Aktion scharfzustellen.

In weiterer Ausgestaltung der Erfindung ist vorgesehen, dass für ein lösbares Ringelementende zwei wahlweise in Wirkung tretende Rückhalteelemente vorgesehen sind. Von diesen beiden Rückhalteelementen kann eines nur mit dem Schlüssel für das Schloss in eine Offenstellung gebracht werden. Das zweite Rückhalteelement lässt sich ohne Schlüssel wahlweise durch die Überwindung eines nennenswerten Widerstandes von Hand oder durch die Betätigung der Schlosshandhabe von Hand in eine Offenstellung steuern.

In erster Linie ist daran gedacht, dass ein Rückhalteelement nach Art eines Druckknopfes das lösbare Ringelementende verrastet. Diese Ausgestaltung eignet sich besonders für Seilschlösser, weil aufgrund der ausgeprägten Elastizität und des geringeren Gewichts der Seilschlösser, bei der Fahrt keine so großen Kräfte auf das lösbare Seilende wirken. Dabei wird das lösbare Ringelementende in eine Aufnahme geführt. Bevorzugt ist vorgesehen, dass die Führung eine formschlüssige Geradführung darstellt, wobei zum Abschluss der Einführbewegung die Verrastung erfolgt. Damit enthält die Transportbefestigung form- und reibschlüssige Befestigungselemente.

Bei Bügelschlössern ist eine optimale Befestigung dadurch zu erreichen, dass beide Rückhalteelemente als Riegel ausgebildet sind. Mit einem Riegel, der nur mit zerstörender Kraft überwunden werden kann, können sowohl Seil- als auch Bügelschlösser in ihrer Transportstellung sicher gehalten werden.

Eine weitere Ausgestaltung der Erfindung besteht darin, dass ein Rückhalteelement für mindestens ein lösbares Ringelementende an der Schlosshandhabe vorgesehen ist. Vorzugsweise ist das Rückhalteelement an der Schlosshandhabe selbst ausgebildet. Die Schlosshandhabe ist als gefedert in Schließrichtung gedrückter Schieber ausgebildet und hat an der schließenden Stelle ein J-förmiges Profil, wobei das lösbare Ringelementende für die Transportbefestigung mit seinem Kopf hinter den Bogen des "J" greift und vor die Länge des "J" als Anschlag stößt.

Eine bevorzugte Ausführungsform der Erfindung ist darin zu sehen, dass beiden Rückhalteelementen für das lösbare Ringelementende je eine Stellung der Schlosshandhabe zuzuordnen ist. Die vorzugsweise als Taster ausgebildete Schlosshandhabe wird von dem Benutzer unterschiedlich tief in den Schließkörper eingedrückt und erlaubt, optisch und auch fühlend den Grad der Befestigung des Ringelementendes wahrzunehmen.

Alternativ kann allerdings auch zur Verminderung des baulichen Aufwandes vorgesehen sein, dass die Schlosshandhabe auf den gleichen Riegel wirkt, wie der Schlüssel.

Eine weitere Ausgestaltung der Erfindung ist in einem Warnsignal zur Anzeige der Scharfstellung des im Schließkörper befindlichen Schließriegelmechanismus zu sehen. Das Warnsignal kann von einem Knopf am Schließmechanismus gebildet werden, der bei Scharfstelllung des Schließmechanismus hervortritt und einen Umfangsabschnitt in Leuchtfarbe freigibt. Alternativ kann ein Fenster am Schließkörper des Schlosses bei Scharfstellung mit Leuchtfarbe hinterlegt werden, die verschwindet, wenn der Riegel sich in Transportstellung befindet.

In bevorzugter Ausgestaltung der Erfindung ist vorgesehen, dass die Schlosshandhabe am Schließkörper angeordnet ist. Der Schließkörper enthält üblicherweise schon einen Schließmechanismus in einem Gehäuse, so dass ein zusätzlicher Mechanismus für die Schlosshandhabe und deren Einwirkung auf den Riegel dort einfach vorgesehen werden kann.

Weiterhin wird vorgeschlagen, dass die Schlosshandhabe oder ein Ringelementende oder eine Kombination von beiden auf einen Schaltmechanismus einwirken, wobei der Schaltmechanismus den Schließriegel in wechselnder Folge in eine Verriegelungsstellung und in eine Aufbewahrungsstellung oder Transportstellung bringt. Solche Schaltmechanismen sind z.B. aus Kugelschreibern bekannt. Eine erste Betätigung des Schaltmechanismus bedeutet, dass der Schließriegel scharf steht und nur mit dem Schlüssel zurückgezogen werden kann und eine zweite Betätigung des Schaltmechanismus bewirkt, dass der Schließriegel von der Schlosshandhabe betätigt werden kann. Diese Merkmalskonstellation berücksichtigt, dass bei üblicher Verwendung des Schlosses in wechselnder Folge einmal das Schloss zur Aufbewahrung oder zum Transport ohne Scharfstellung des Schließriegels eingesetzt wird und im anderen folgenden Falle das Schloss in seiner Schließfunktion mit scharf geschaltetem Riegel benötigt wird. Wenn der Schaltmechanismus von dem eingefügten Ringelementende betätigt wird, ergibt sich eine automatische Scharfstellung des Riegels. Alternativ lässt sich die wechselnde Scharf- und Unscharfstellung durch die Betätigung einer Taste oder eines Schiebers bewirken. Schließlich ist eine Kombination von automatischer Scharfstellung durch die Einfügung eines Ringelementendes und die Entschärfung des Schließriegels ausschließlich bei mindestens einem nicht eingefügten Ringelementende vorgesehen.

Um Fehlbedienungen zu vermeiden wird vorgeschlagen, dass die Schlosshandhabe in der Schließstellung des Ringschlosses wirkungslos geschaltet ist. Um Fehlbedienungen zu vermeiden, erfolgt die "Scharfstellung" des Schließriegels automatisch bei Einführung mindestens eines freien Endes des Ringelements in den Schließkörper. Dabei soll der Schaltmechanismus die Funktion des Riegels und des Warnsignals steuern.

In alternativer Ausgestaltung der Erfindung wird vorgeschlagen, dass mindestens ein Ringelementende für den Transport oder die Aufbewahrung des Schlosses einerseits und für die Schließfunktion des Schlosses andererseits unterschiedlich in den Schließkörper eingeführt wird. Hierzu wird der Schließriegel von dem in einer bestimmten Art in den Schließkörper einzuführenden Ringelementende gemieden oder ohne Verriegelung passiert.

Nach einer bevorzugten Weiterbildung der Erfindung ist vorgesehen, dass das Ringschloss Teile einer Befestigungsvorrichtung zum Transport an einem Fahrrad umfasst. Wie eingangs erwähnt, ist der Transport von Ringschlössern an einem Fahrrad noch nicht zufriedenstellend gelöst, wobei zu berücksichtigen ist, dass für den Schließvorgang der Schlüssel in die Hand genommen werden muss, das Ringschloss abgenommen werden muss und der Schließvorgang üblicherweise mit beiden Händen erfolgen muss. Nach dieser Weiterbildung der Erfindung muss aber das Schloss, wenn es sich denn um ein Seilschloss handelt, nicht notwendig abgenommen werden und der Schließvorgang braucht nicht notwendig zwei Hände sondern kann mit einer Hand erfolgen.

Die Befestigungsvorrichtung ist vorzugsweise so ausgestaltet, dass sie eine Aufnahme für den Schließkörper aufweist. Ergänzend oder alternativ soll die Befestigungsvorrichtung eine Aufnahme für das Ringelement aufweisen.

Eine solche Befestigungsvorrichtung, die sowohl eine Aufnahme für den Schließkörper, als auch eine für das Ringelement aufweist, erlaubt die Benutzung des Schließmechanismus des Ringschlosses zur Befestigung des Schlosses an der Befestigungsvorrichtung.

Mit einem ergänzenden Merkmal der Erfindung, insbesondere für Bügelschlösser ist vorgesehen, dass die Befestigungsvorrichtung eine Schnellkupplung umfasst. Ein Bügelschloss muss für den Schließvorgang abgenommen werden, um es räumlich so anzuordnen, dass es einen Zusammenschluss des Fahrrades und eines strangförmigen, immobilen Elements, wie z.B. einer Straßenlaterne, erlaubt. Dabei ist zunächst daran gedacht, dass die Schnellkupplung den Schließmechanismus des Ringschlosses für die Befestigung am Fahrrad benutzt.

In alternativer Ausgestaltung der Erfindung ist vorgesehen, dass die Befestigungsvorrichtung eine nebengeordnete Zweitschließe für die Transportbefestigung mindestens eines Ringelementendes aufweist, alternativ zu dem ersten Schließmechanismus im Schließkörper. Dabei soll die Zweitschließe einen Transportriegel umfassen, der von der Handhabe gesteuert wird und die Handhabe und die Zweitschließe sollen an der Befestigungsvorrichtung ausgebildet sein. Alternativ kann die Schlosshandhabe an einem Ringelementende ausgebildet sein. Dabei handelt es sich um ein Komfortmerkmal, weil der Schließkörper z.B. durch eine Befestigungsvorrichtung häufig schlechter zugänglich ist.

Eine Ausführungsform der Erfindung ist **dadurch gekennzeichnet, dass** mindestens ein Ringelementende in zwei unterschiedlichen Einstecktiefen in dem Schließkörper verriegelt werden kann. Dabei liegt die Transportverriegelung immer auf der Eingangsseite der Anschlussstelle am Schließkörper und die Schließverriegelung dahinter.

Bevorzugt soll die richtige Einstecktiefe dadurch gewährleistet werden, dass die unterschiedlichen Einstecktiefen durch Anschläge begrenzt sind und es ist insbesondere daran gedacht, dass bei einem Schloss mit Befestigungsvorrichtung ein Anschlag zur Begrenzung der Einstecktiefe des Ringelementendes an der Befestigungsvorrichtung anliegt oder ausgebildet ist. Der Anschlag kann am Ringelementende ausgebildet sein und sein Pendant finden am Schließkörper oder an der Befestigungsvorrichtung.

In alternativer Ausgestaltung der Wahlmöglichkeit zwischen der Transportschließung und der Sicherungsschließung gegen Diebstahl ist vorgesehen, dass mindestens ein Ringelementende für die Transportsituation und die Schließfunktion in unterschiedlichen Drehlagen in den Schließkörper eingefügt wird. Insbesondere bei einem Seilschloss kann das eine lösbare Ringelementende unrund ausgebildet sein mit mindestens zwei Steckvarianten, denen jeweils die Schließ-oder die Transportverriegelung zugeordnet ist.

Für Bügelschlösser ist nach einer weiteren Ausgestaltung der Erfindung vorgesehen, dass mindestens eines der Bügelenden durch Umsetzen des Bügels um 180 deg gegenüber dem Schließkörper und Austausch der Bügelenden in den Anschlussstellen am Schießkörper verriegelt wird. Dabei sollen vorzugsweise die Bügelenden unterschiedlich tief in den Schließkörper eingesteckt werden können. Mindestens ein Bügelende soll in der einen Fügeposition nur in einer Transportverriegelung gehalten werden und in der anderen Fügeposition sollen beide Bügelenden in ihrer Schließposition verriegelt werden.

Die Erfindung betrifft im Speziellen ein Seilschloss. Seilschlösser haben die Besonderheit, dass sie wegen der Wendelform des Seils beim Transport kleiner sind als Bügelschlösser und dass sie leichter sind als Bügelschlösser. Seile von Seilschlössern sind im Unterschied zu den Bügeln von Bügelschlössern flexibel.

Für Seilschlösser stellt sich insbesondere die Aufgabe einerseits das Schließen des Seilrings ohne Schlüssel zu ermöglichen aber andererseits einen großen Aufwand für die Transportschließe zu vermeiden.

Die Lösung dieser Aufgabe ist im Patentanspruch 22 wiedergegeben.

Diese Lösung stellt sich so dar, dass ein Seilende alternativ verriegelt oder verrastet werden kann. Die Verriegelung dient der klassischen Diebstahlsicherung und die Verrastung dient der leicht lösbaren Transportbefestigung eines freien Seilendes. Bei der Verrastung nach Art eines Druckknopfes ist der Widerstand gegen Lösung der Rastverbindung merklich aber von dem Benutzer ohne Werkzeug überwindbar.

Dabei wird erreicht, dass für den gesamten Prozess des Lösens der Transportbefestigung bis zum Abschluss des Schließvorganges kein Schlüssel benötigt wird.

Auch das Seilschloss soll, wie vorstehend generell für das Ringschloss beschrieben, mit einer Befestigungsvorrichtung kombiniert sein, vorzugsweise auch mit einer Schnellkupplung. Verriegelung und Verrastung des lösbaren Seilendes sollen in dem gleichen Loch erfolgen. Bevorzugt sollen Verriegelung und Verrastung mit dem gleichen Riegel erfolgen, wobei der Unterschied in der Festlegung des Seilendes durch dessen Gestalt bewirkt wird.
Die Schnellkupplung ist dabei in ihrer Funktion unabhängig von dem Schließmechanismus des Seilschlosses.

In einer anderen Ausführungsform ist vorgesehen, dass zwei Schließen für das lösbare Ende des Seilschlosses vorgesehen sind. Dadurch kann der Schließmechanismus eines herkömmlichen Seilschlosses mit einer nur durch den Schlüssel entriegelbaren Schließe beibehalten werden. Die Zweitschließe für die Verrastung des lösbaren Seilendes befindet sich dann vorzugsweise in der Befestigungsvorrichtung zur Anbringung des Schlosses an einem Fahrradrahmen.

Eine bevorzugte Weiterbildung der Erfindung besteht darin, dass eine gemeinsame Handhabe zum Trennen der Schnellkupplung und zum Entsperren des lösbaren Ringelementendes vorgesehen ist.

Bevorzugt ist vorgesehen, dass das lösbare Seilende zumindest bereichsweise unrund ausgebildet ist, mit mindestens zwei durch Drehung um seine Längsachse definierten Drehlagen, in denen es in eine Öffnung im Schließkörper eingesteckt werden kann, wobei in einer Drehlage eine Verriegelung des lösbaren Seilendes erfolgt, und in der anderen Drehlage dessen Verrastung.
Dieser Aspekt kann so ausgestaltet sein, dass das Seilende ankerförmig ausgestaltet ist, mit einem mindestens rechtwinklig zur Längsachse ausgebildeten Hinterschnitt und mit einem gegenüberliegenden Hinterschnitt, der als Auflage für einen als Schnäpper ausgebildeten Riegel eine Rampe aufweist. Wenn der Schnappriegel an der Rampe anliegt, weicht er gegen eine vom Benutzer auf das Seilende aufzubringende Zugkraft aus. Das Eigengewicht und bei einer Fahrt auftretende Erschütterungen reichen nicht aus, um die Transportverrastung zu lösen. Die Feder des Schnappriegels und die Neigung der Rampe sind für eine sichere Transportverrastung ausgelegt.

Hauptsächlich ist vorgesehen, dass für das lösbare Seilende zwei Aufnahmen vorgesehen sind, wovon eine zum Verriegeln und die andere zum Verrasten des Seilendes ausgebildet ist, wobei die Aufnahme zum Verrasten an der Befestigungsvorrichtung ausgebildet ist.

Alternativ kann eine Ankerkontur eines Seilendes mit einem oder mehreren etwa rechtwinkligen Hinterschnitten oder mit einem umlaufenden rechtwinkligen Hinterschnitt unterschiedlichen Schnäppern zugeordnet werden. Dabei ist ein Schnäpper als Haken und ein weiterer mit mindestens zwei Rampen ausgebildet, wobei die Rampen ein kraftabhängiges Ausweichen beim Einführen und beim Herausziehen des Seilendes in die zugehörige Aufnahme erlauben.

Die Erfindung wird im Einzelnen anhand der Zeichnung erläutert, dabei zeigen:
- Fig. 1:: ein Fahrrad mit einem daran befestigten Bügelschloss;
- Fig. 2:: eine Explosivdarstellung eines Fahrrad- Bügelschlosses mit Befestigungsvorrichtung am Fahrrad;
- Fig. 3:: einen aufgeschnittenen Schließkörper eines Bügelschlosses;
- Fig. 4:: den aufgeschnittenen Schließkörper aus Fig.1 und Fig.2;
- Fig. 5:: ein Seilschloss mit Befestigungsvorrichtung und Schnellkupplung;
- Fig. 6:: ein Bügelschloss mit einer ersten Einsteckorientierung des bügelförmigen Ringelements;
- Fig. 7:: das Bügelschloss aus Fig.6 mit einer gewendeten Einsteckorientierung des Schlossbügels;
- Fig. 8:: ein Seilschloss nach der Erfindung in einer ersten Fügeposition;
- Fig. 9:: das Seilschloss nach Fig.8 in einer zweiten Fügeposition;
- Fig. 10:: eine alternative Ausführungsform eines Seilschlosses mit Befestigungsvorrichtung an einem Fahrradrahmen.
- Fig. 11: eine Prinzipskizze zum Zusammenwirken von Schlosshandhabe und schlüsselbetätigtem Riegel;
- Fig. 12: eine Prinzipskizze mit einer Handhabe, die den Schließkörper am Fahrradhalter und gleichzeitig ein Ringelementende im Schließkörper ver- und entriegelt.

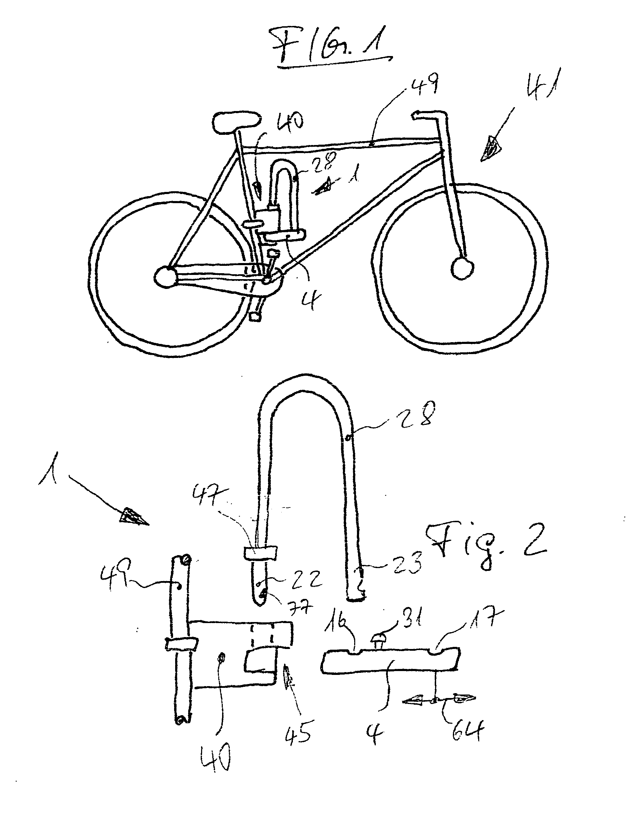

Fig.1 zeigt ein Fahrrad 41 mit einem Rahmen 49 so wie einer Befestigungsvorrichtung 40 zur Befestigung eines Ringschlosses 1, das als Bügelschloss ausgebildet ist und als Ringelement einen Bügel 28 aufweist, der durch einen Schließkörper 4 geschlossen wird.

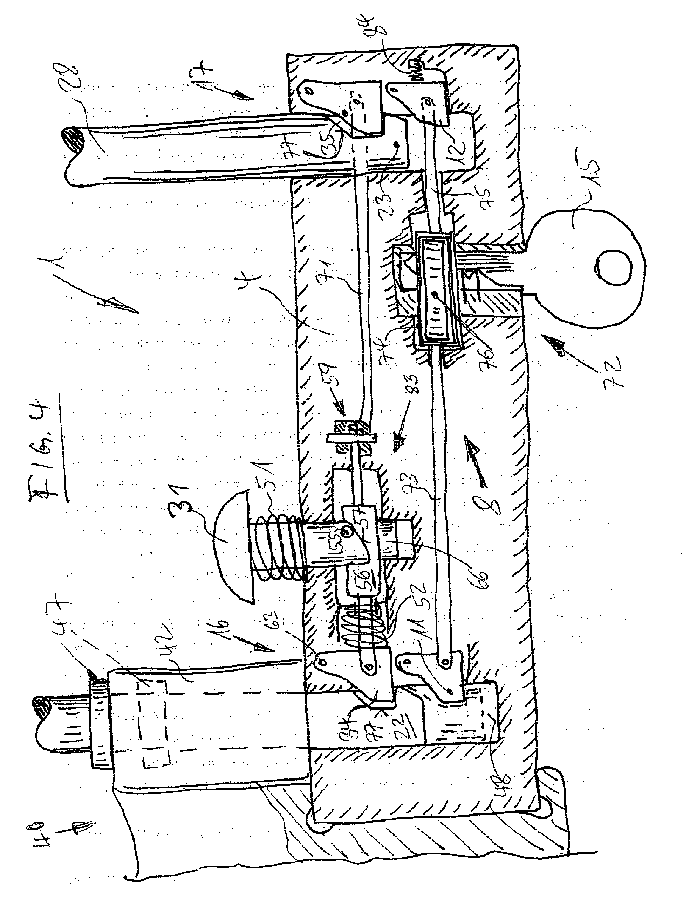

In Fig.2 ist das Bügelschloss 1 mit seiner Befestigungsvorrichtung 40 und einer Schnellkupplung 45 gezeigt, wobei der Stahlbügel 28 und der Schließkörper 4 getrennt sind und in ihrer Position vor dem Einstecken in die Befestigungsvorrichtung 40 gezeigt sind. Das als Bügel ausgebildete Ringelement 28 weist zwei Ringelementenden 22, 23 auf, die in den Schließkörper 4 eingesteckt werden. Beide Ringelementenden 22, 23 haben im Bereich ihrer unteren Enden eine quer ausgerichtete Riegelkerbe 77 und werden in die Anschlussstellen 16, 17 eingesteckt. Der Fügevorgang des Ringschlosses 1 in der Befestigungsvorrichtung 40 zum Transport des Ringschlosses beginnt mit dem Einstecken des Schließkörpers 4 in Richtung des Pfeiles 64 in die dafür vorgesehene Aufnahme in der Befestigungsvorrichtung 40. Anschließend wird der Schlossbügel 28 durch eine Öffnung in der Befestigungsvorrichtung 40 mit seinem Ende 22 in die Anschlussstelle 16 und mit seinem Ringelementende 23 in die Anschlussstelle 17 eingesteckt. Durch einen als Ringbund ausgebildeten Anschlag 47 wird die Einsteckbewegung begrenzt. Die Befestigungsvorrichtung 40 erfasst den Schließkörper 4 und den Bügel 28 und nutzt einen Schließmechanismus im Schließkörper 4 für die Befestigung am Fahrrad 41 während der Fahrradfahrt. Zum Lösen dieser Transportbefestigung dient eine am Schließkörper vorgesehene Schlosshandhabe 31, die als Taster ausgebildet ist und nicht ein Schlüssel, was noch im Zusammenhang mit Fig.4 beschrieben wird.

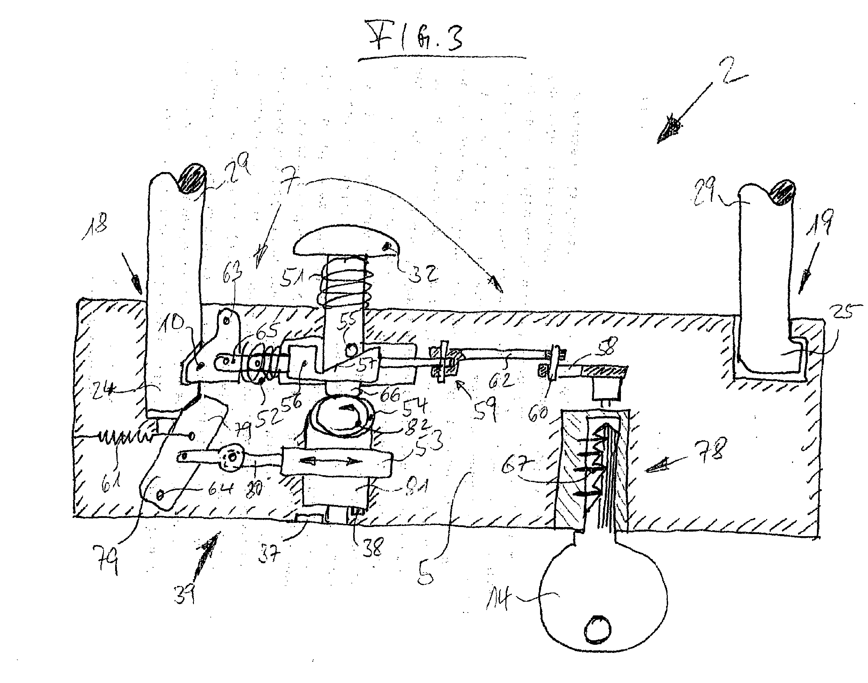

In Fig.3 ist im Wesentlichen ein Schließkörper 5 eines Ringschlosses 2 gezeigt, in den die Ringelementenden 24, 25 eines bügelförmigen Ringelements 29 eingesteckt sind. Neben den Anschlussstellen 18, 19 für die Ringelementenden 24, 25 ist ein Schließmechanismus 7 gezeigt, der einen Schließ- und Transportriegel 10 steuert. Weiterhin umfasst der Schließkörper 5 einen Schließmechanismus 39 für die ursprüngliche Aufgabe eines jeden Schlosses, einen Gegenstand zu sichern, im vorliegenden Falle ein Fahrrad 41 zu sichern. Der Schließriegel 10 sorgt sowohl für die Transportsicherung des Ringschlosses 2 und deren Lösung als auch für die Diebstahlsicherung durch Schutz gegen unbefugtes Öffnen des Schlosses. Hierzu ist der Schließriegel 10 sowohl an die Schlosshandhabe 32 als auch an ein Zylinderschloss 78 mit Schlüssel 14 angeschlossen und kann im noch zu beschreibenden Zusammenhang sowohl von der Schlosshandhabe 32 als auch mit dem Schlüssel 14 betätigt werden.

Das Zylinderschloss 78 mit seinen Zuhaltungen 67 trägt an seinem im Schließkörper 5 befindlichen Ende eine Exzenterscheibe mit einem radial ausgerichteten Langloch 58 in das ein Gelenkbolzen 60 eines Koppelstücks 62 eingreift. Letzteres ist über ein Gelenk 59 mit einem Schieber 56 im Schließkörper 5 verbunden. Der Schieber 56 ist mit einem Gestänge 65 an den Schließriegel 10 angeschlossen. Eine Druckfeder 52 macht aus dem bei 63 im Schließkörper angelenkten Schließriegel 10 einen federbelasteten Schnappriegel. So kann durch die vorbeschriebene Kette von Betätigungselementen der Schließriegel 10 durch Betätigung des Schlüssels 14 in seine Öffnungsstellung gebracht werden, ohne dass sich die Schlosshandhabe 32 und die Betätigung durch den Schlüssel 14 gegenseitig behindern.

Der Schließköper 5 umschließt weiterhin den Schaltmechanismus 39. Teile des Schaltmechanismus 39 sind der Steuerhebel 79, der von einer Zugfeder 61 gegen das Ringelementende 24 gezogen wird, ein Schaltgestänge 80, das in ein Freilaufgetriebe 53 eingreift und dort eine Welle 81 gemäß Pfeil 82 einsinnig dreht. Die Welle 81 trägt auf ihrer der Schlosshandhabe 32 zugewandten Seite eine Stirnkurve 54, die alternativ die Betätigung der Schlosshandhabe 32 mit deren Stößel 66 gegen die Kraft einer Druckfeder 51 hindert oder freigibt. Jede Hin- und Herbewegung des Steuerhebels 79 schaltet die Welle 81 um 180 deg weiter. In der gezeigten Stellung ist die Bewegung bzw. Betätigung der Schlosshandhabe 32 gehindert. Das Bügelschloss 2 befindet sich in seiner Schließsituation. Es wird davon ausgegangen, dass nach Entriegeln des Schlosses 2 durch den Schlüssel 14, durch Öffnen des Bügels 29 und durch erneutes Zusammenfügen von Bügel 29 und Schließkörper 5 eine Transportsituation für das Schloss 2 vorgesehen ist, an die sich wieder eine Schließsituation anschließt.

Nach diesem Öffnen des Schlosses 2 und erneutem Zusammenfügen des Bügels 29 und des Schließkörpers 5 für den Transport hat der Schaltmechanismus die Welle 81 um 180 deg gedreht. Dadurch kann die Schlosshandhabe 32 mit dem daran ausgebildeten und in den Schließkörper 5 hineinragenden Stößel 66 gegen die Kraft der Feder 51 in den Schließkörper 5 eingedrückt werden.

Im Schieber 56 ist ein Einschnitt mit einer Rampe 57 vorgesehen, auf der ein quer aus dem Stößel 66 herausragender Stift 55 gleitet und dabei den Schieber - in der Zeichnung - nach rechts bewegt. So wird in der Transportsituation des Schlosses 2, bei Betätigung der Schlosshandhabe 32, über den Stift 55 und das Ausweichen des Schiebers 56 mit der Rampe 57 nach rechts der Schließriegel 10 in seine Öffnungsstellung gebracht. Dabei gleitet der Gelenkbolzen 50 in dem Langloch 58, so dass die Bewegung des Schiebers 56 durch das Zylinderschloss 78 nicht behindert wird.

Der Nutzer des Schlosses 2 erhält ein Signal, ob die Schließung des Schlosses 2 scharfgestellt ist (für eine Schließverriegelung oder ob eine Transportverriegelung vorliegt. Hierzu ist am Schließkörper 5 ein Fenster 37 vorgesehen, vor das sich im Falle der Scharfstellung eine Signalfläche 38 schiebt, deren Sichtbarmachung signalisiert, dass der nächst Schließvorgang des Schlosses ansteht, für dessen Änderung ein Schlüssel notwendig wird.

Die Ausführungsform des Ringschlosses 2 nach Fig.3 erlaubt einen alternativen Zugriff auf den Schließriegel 10 durch Betätigung des Schlüssels 14 und durch Betätigung der Schlosshandhabe 32. Die Betätigung der Schlosshandhabe 32 wird nur nach jedem zweiten Öffnen und Schließen des Bügelschlosses 2 möglich, während mit der Betätigung des Schlüssels sowohl die Schließverriegelung als auch die Transportverriegelung des Bügels 29 im Schließkörper 2 gelöst werden können.

In Fig.4 ist das Ringschloss 1 mit einer Befestigungsvorrichtung 40 zur Befestigung des Schlosses 1 z.B. an einem Fahrrad - Rahmenrohr gezeigt (s. Fig.1).
Das als Bügel 28 ausgebildete Ringelement 28 steckt mit seinen Enden 22, 23 in den Anschlussstellen 16, 17 und wird dort von Riegeln 34, 35 gesichert. Die schwenkbaren und bei 63 im Schließkörper angelenkten Riegel 34, 35 sind an die Schlosshandhabe 31 angeschlossen und von dieser zu betätigen. Zusätzlich sind in dem Schließkörper 4 Schließriegel 11, 12 vorgesehen, die nur über das Zylinderschloss 72 und den Schlüssel 15 zu betätigen sind. Welches der beiden Riegelpaare 34, 35 oder 11, 12 den Bügel 28 arretiert, hängt von der Einstecktiefe des Bügels 28 in den Schließkörper 4 ab. Im gezeigten Falle der Verwendung der Befestigungsvorrichtung 40 ist Einstecktiefe so begrenzt, dass die in den Ringelementenden 22, 23 ausgebildeten Kerben 77 nur von den Transportriegeln 34, 35 erreicht werden können. Dazu ist an dem Bügel 28 in der Nähe des Ringelementendes 22 ein Ringbund 47 als Anschlag ausgebildet, der im Zusammenwirken mit einer an der Befestigungsvorrichtung angeformten, in ihrer Länge abgestimmten und von dem Ringelement 28 durchdrungenen Manschette 42 ein tieferes Eindringen des als Bügel ausgebildeten Ringelements 28 verhindert. Diese Konstellation gehört zu der Transportsituation des Ringschlosses 1 mit Befestigung durch die Befestigungsvorrichtung 40, z.B. an einem Fahrrad 41.

Zur Sicherung gegen Diebstahl wird das Ringschloss 1 von der Befestigungsvorrichtung 40 getrennt und nach Einschluss des zu sichernden Gegenstandes und eines immobilen Gegenstandes, z.B. eines Laternenmastes wieder zusammengefügt. In dieser Schließsituation, ohne die Verwendung einer Manschette 42 der Befestigungsvorrichtung 40, kann der Bügel 28 tiefer in den Schließkörper 4 eindringen und erreicht mit seinen Riegelkerben 77 die tiefer gelegenen Riegel 11, 12, die ausschließlich durch das Zylinderschloss 72 mit dem Schlüssel 15 gesteuert werden können. Die Einstecktiefe des Bügels 28 ist dann durch den als Anschlag 48 ausgebildeten Boden der Einstecköffnung 16 begrenzt. Entsprechendes gilt für das andere Einsteckende 23.

Die Verbindung der Schlosshandhabe 31 mit den Transportriegeln 34, 35 stellt eine Zweitschließe 83 dar, gegenüber den Schließriegeln 11, 12, die über den Schlüssel 15 gesteuert werden.

Bei der in Fig.4 dargestellten Situation können die Riegel 34, 35 ausschließlich durch Betätigung der Schlosshandhabe 31 gelöst, d.h. zurückgezogen werden, wenn der Bügel 28 abgenommen werden soll. Die Schlosshandhabe 31, der Stößel 66 mit dem Querstift 55, die Druckfeder 51 und der Schieber 56 mit seiner Rampe 57 sind wie in Fig.3 ausgebildet. Auch die Verbindung mit dem Transportriegel 34 als Schnappriegel mit der Druckfeder 52 sind in Fig.3 und Fig.4 gleichwirkend. Auf der Seite des Ringelementendes 23 ist der Schieber 56 über ein Gelenk 59 und eine Koppel 71 gelenkig mit dem zweiten Transportriegel 35 verbunden, der mit dem Transportriegel 34 synchronisiert ist.

Die Schließriegel 11, 12 sind ebenfalls synchronisiert und werden von einer Feder 84 in Schließstellung gedrückt. Betätigt werden sie als Schnappriegel von den Ringelementenden 22, 23 und zum Öffnen von dem Schlüssel 15 über das Zylinderschloss 72. An dem Zylinderschloss 72 ist eine mit dem Schlosskern verbundene und drehbare Exzenterscheibe 76, die in einem Käfig 74 geführt ist und diesen Käfig 74 mit den daran befestigten Schubstangen 73, 75 bei Drehung des Schlosskerns hin und her bewegt. Diese Bewegung überträgt sich zwangsweise auf die Schließriegel 11, 12, die tiefer unten, in Einsteckrichtung hinter den Transportriegeln 34, 35, in den Anschlussstellen 16, 17 angeordnet sind als die Transportriegel 34, 35.

Beim Lösen der Schließverriegelung und dem folgenden Herausziehen des Bügels 28 schnappen zunächst noch die Transportriegel 34, 35 in die Kerben 77 ein und dies verlangt eine zusätzliche Betätigung der Schlosshandhabe 31 zur vollständigen Trennung des Bügels 28 von dem Schließkörper 4. Diese Lösung hat den Vorzug, dass der Nutzer nach dem Lösen der Schließverriegelung zunächst nur ein einziges Teil, das gesamte Ringschloss 1, in der einen Hand halten muss und mit der zweiten Hand den Schlüssel abziehen und verstauen kann.

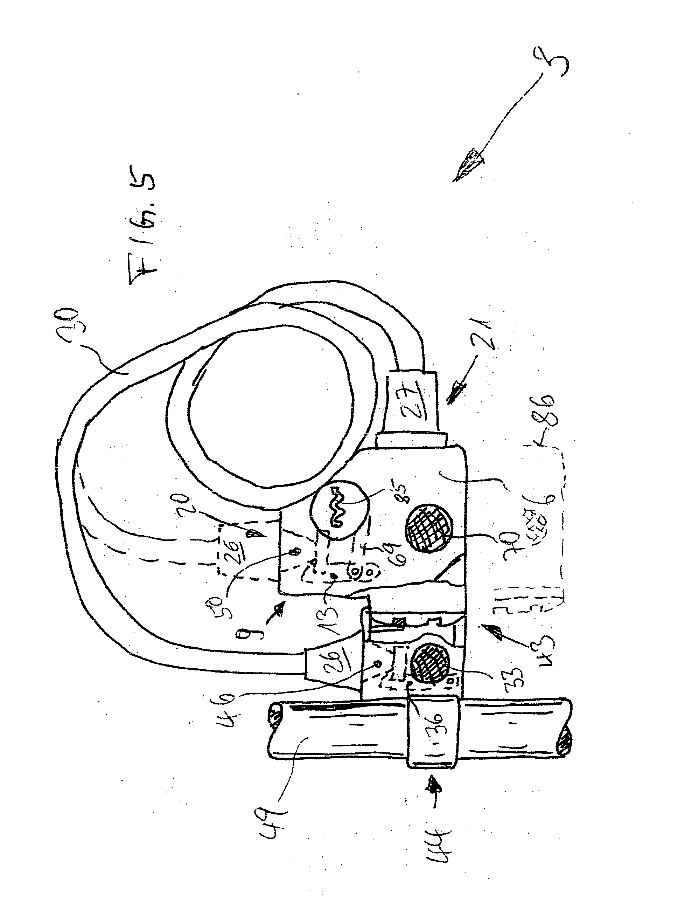

In Fig.5 ist die Verwendung der Erfindung bei einem als Seilschloss ausgebildeten Ringschloss 3 gezeigt. Das Seil 30 ist als Ringelement ausgebildet. Zu dem Schloss 3 gehört eine Befestigungsvorrichtung 44 sowie eine Schnellkupplung 43, die in dem eingangs beschriebenen DE 9320765 U1, das hiermit vollinhaltlich einbezogen wird, erläutert sind. Das Ringschloss 3 weist neben dem als Drahtseil 30 ausgebildeten Ringelement 30 einen Schließkörper 6 auf, wobei die Ringelementenden 26, 27 in der Schließfunktion des Ringschlosses 3 in den Anschlussstellen 20, 21 im Schließköper 6 gehalten werden. Das Ringelementende 27 ist dauerhaft im Schließkörper 6 verankert, während das lösbare Ringelementende 26 alternativ in die Anschlussstelle 20 am Schließkörper 6 oder in eine Zweitschließe 46 an der Befestigungsvorrichtung 44 eingesteckt werden kann.

Der Schließkörper 9 umfasst neben den erwähnten Anschlussstellen 20, 21 einen Schließmechanismus 9 mit einem Zylinderschloss 85, einer daran angeschlossenen Koppel 69 und einen damit verbundenen Riegel 13, der in einen Hinterschnitt des ankerförmig 50 ausgebildeten Ringelementendes 26 eingreifen kann. Weiterhin ist im Schließkörper 6 eine Handhabe 70 vorgesehen, mit der ein Riegel in der Schnellkupplung 43 gelöst werden kann, so dass der Schließkörper 6 herausgezogen werden kann, wie bei 86 gestrichelt angedeutet ist.

Eine Verankerung des Ringelementendes 26 in der Anschlussstelle 20 kann nur durch Betätigung des Schlosszylinders 85 mit einem Schlüssel gelöst werden. Damit ist die Schließsituation beschrieben, in der mit dem Ringschloss 3 vorzugsweise ein Fahrrad 41 mit einem Rahmenrohr 49, z.B. an einer Laterne angeschlossen werden kann.

In der in Fig.5 gezeigten Situation ist das Ringschloss 3 zum Transport an einem Fahrrad 41 gezeigt. Das lösbare Ringelementende 26 ist an der Befestigungsvorrichtung 44 verriegelt. Es kann über die Betätigung einer tastenförmigen Handhabe 33 und einem von dieser betätigten Riegel 36 gelöst und dann herausgenommen werden. Dazu bedarf es keiner Trennung an der Schnellkupplung 43. Der gesamte Schließvorgang kann unter Beibehaltung der Befestigung des Schließkörpers 6 an der Befestigungsvorrichtung 44 erfolgen. Der Benutzer muss den Schließkörper 6 dann für den Schließvorgang nicht in der Hand halten.

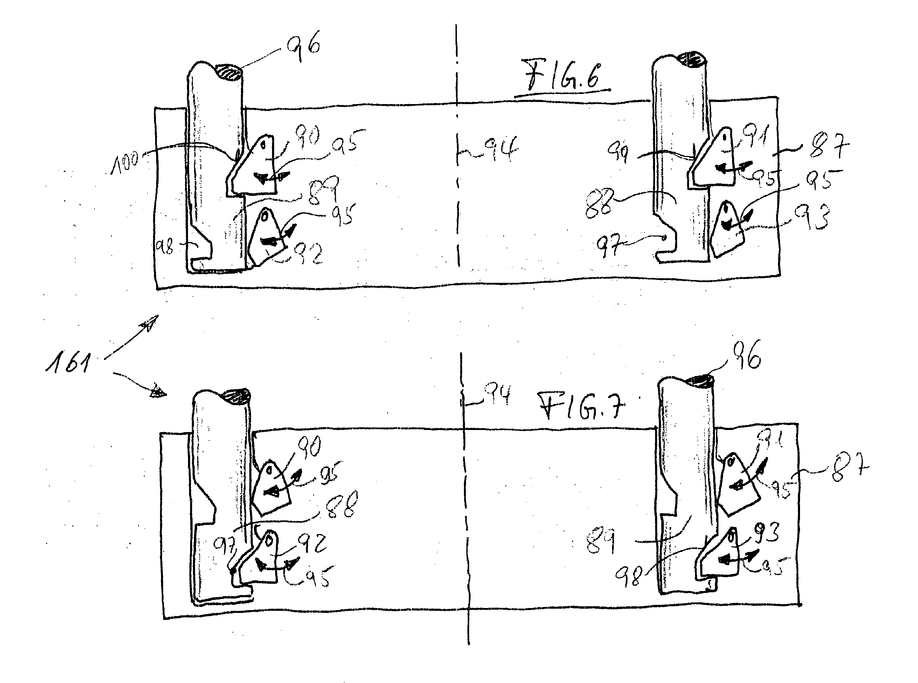

Die in den Fig.6 und Fig.7 gezeigte Ausführungsform des erfindungsgemäßen Ringschlosses 161 zeigt zwei um 180 deg gegeneinander verschwenkte Einsteckorientierungen eines als Bügel 96 ausgebildeten Ringelements, dessen Enden 88, 89 einmal rechts und einmal links in den unveränderten Schließkörper 87 eingesteckt gezeigt sind. Die Schwenkung um 180 deg, d.h. um eine halbe Umdrehung, ist um die Schwenkachse 94 quer durch die Längsmitte des Schließkörpers 87 erfolgt.

Die Betätigung der Riegel 90, 91, 92, 93 erfolgt, wie in Fig.4 dargestellt, mit einer in Fig.6 und Fig.7 nicht wiederholten Schlosshandhabe und einem Schlüssel-Schlosssystem, wie dort gezeigt. Die Riegel 90, 91, 92, 93 sind in nicht dargestellter Weise federbelastet in Schließstellung gedrückt und entsprechend den Pfeilen 95 schwenkbar in dem Schließkörper 87 gelagert.

In der in Fig.6 gezeigten Anordnung wird der Bügel 96 von den Transportriegeln 90, 91 gehalten, wohingegen die Schließriegel 92, 93 wirkungslos am Umfang der Ringelementenden 87, 88 anliegen. Funktional gleichwirkende Kerben 97, 98 für die Schließfunktion und Kerben 99, 100 für die Transportverriegelung sind auf gleichen Seiten der Ringelementenden 88, 89 angeordnet, d.h. in der Zeichnung sind die Kerben 97, 98 beide links angeordnet und die Kerben 99, 100 sind beide rechts angeordnet. Wichtig ist, zur Erzielung einer Verankerung beider Ringelementenden 88, 89 im Schließkörper 87, dass die Riegel 90, 91, 92, 93 und die zugehörigen Kerben 97, 98, 99, 100 nicht klappsymmetrisch zur Schwenkachse 94 angeordnet sind. Dies gilt insbesondere für die gezeigte Anordnung aller Riegel 90, 91, 92, 93, alle auf der gleichen Seite, rechts von den zugehörigen Ringelementenden 88, 89.
Auf diese Weise wird sichergestellt, dass durch die Anordnung der Ringelementenden 88, 89 in dem Schließkörper 87 eine automatische Auswahl von Transportverriegelung oder Schließverriegelung erfolgt. Diese Auswahl der Verriegelung in dem Schließkörper wird durch nicht gezeichnete farbliche oder symbolhafte Kennzeichen am Bügel 96 und am Schließkörper 87 verdeutlicht.

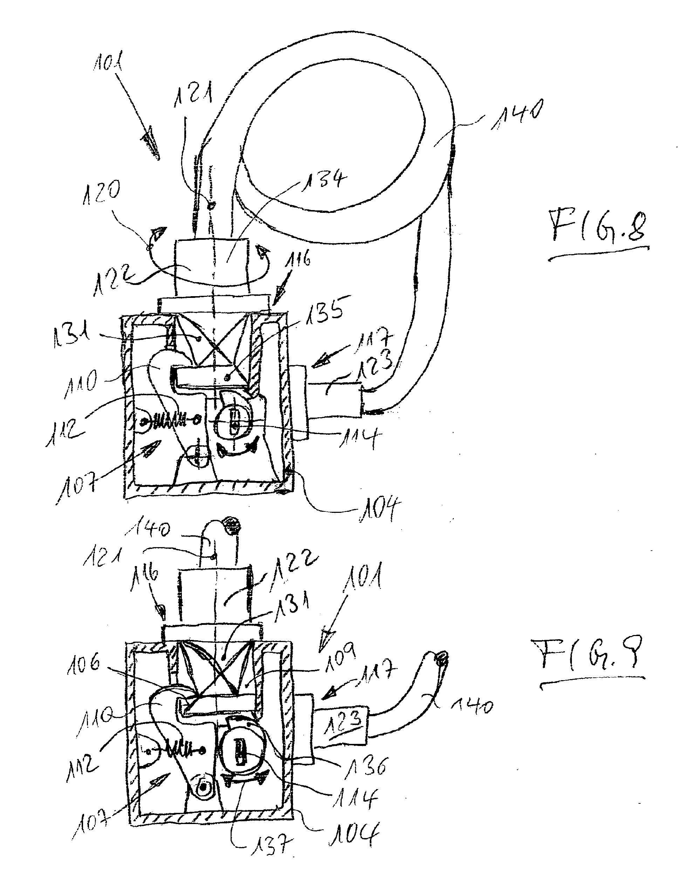

In Fig.8 ist ein Seilschloss 101 gezeigt, das ein Seil 140, einen Schließkörper 104 und einen Schließmechanismus 107 umfasst. Die beiden Enden 122, 123 des Seiles 140 sind beide im oder am Schließkörper 104 in Anschlussstellen 116, 117 festgelegt. Das Seilende 122 ist lösbar im Schließkörper 104 befestigt. Das Seilende 123 ist dauerhaft an der Anschlussstelle 117 befestigt. Das Seilende 122 hat ein verdicktes Endstück 134, das mit einem flanschartigen Abschnitt aussen auf dem Schließkörper 104, auf dem Rand der Anschlussstelle 116 aufliegt. Das Endstück 134 ragt mit einem pyramidenstumpfförmigen Abschnitt 131 in den Schließkörper 104 hinein. Die Anschlussstelle 116 ist dem Pyramidenstumpf entsprechend viereckig ausgebildet. An der Spitze des Endstücks 134 ist ein den Pyramidenstumpf seitlich überragendes Kopfstück 135 vorgesehen. Auf der einen Seite des Pyramidenstumpfes 131 ragt das Kopfstück 135 mit einem rechtwinklig zur Längsachse 121 ausgeformten Hinterschnitt 109 über diesen hinaus, während auf der gegenüberliegenden Seite der Überstand von einer schräg verlaufenden Rampe 106 gebildet wird, die mit dem Pyramidenstumpf 131 eine flache Mulde bildet. In diese Mulde greift, wie aus Fig.9 ersichtlich ein Schließriegel 110 ein.

Der Schließriegel 110 ist in dem Schließkörper 104 gelenkig gelagert. Er wird von einer Druckfeder 112 in die in Fig.8 gezeigte Verriegelungsstellung gedrückt. Die Verriegelung wird durch einen Schließzylinder mit einem Schlüsselloch 114 gelöst. Hierzu trägt der Schließzylinder einen Nocken 136 an seinem Umfang, der bei Drehung des Schließzylinders in Richtung des Pfeiles 137 gegen die Kraft der Druckfeder 112 auf den Riegel 110 einwirkt und diesen in die Entriegelungsstellung führt.

Fig.9 zeigt das Seilschloss aus Fig.8 mit einem um 180 deg entsprechend Pfeil 120 gedrehten Endstück 134 des Seiles 140. Der Riegel 110 hintergreift nicht den nun auf der gegenüberliegenden Seite angeordneten rechtwinkligen Hinterschnitt 109, der im Zusammenwirken mit dem Schließriegel 110 für eine diebstahlsichere Schließung steht, sondern er liegt in einer Mulde zwischen der Rampe 106 und der Schräge des Pyramidenstumpfes 131 am Endstück 134 des Seiles 140. Diese in Fig.9 dargestellte Situation ist keine Verriegelungssituation sondern eine Verrastungssituation in der sich das Schloss 101 in der in Fig.9 gezeigten Position befindet. Der Benutzer kann mit Handkraft das Seilende 122 aus dem Schließkörper 104 herausziehen. Das Seil 140 selbst bildet mit seinem endnahen Abschnitt am Seilende 122 eine Handhabe, mit der die in Fig.9 dargestellte Transport-, Aufbewahrungs- oder Bereitschaftsbefestigung des Seilendes 122 im Schließkörper 104 durch kräftiges Ziehen am Seil 140 gelöst werden kann. Dabei rutscht der für die Verrastung am Endstück 134 verantwortliche Schließriegel 110 gegen die Kraft der Druckfeder 112 über die Rampe 106 und gibt ohne Betätigung des Schließzylinders mit dem Schlüsselloch 114 das Seilende 122 frei. Bei der in Fig.8 und Fig.9 gezeigten Ausführungsform des Seilschlosses 101 erfolgt sowohl die Schließverriegelung des Seilendes 122 als auch seine Verrastung in der gleichen Anschlussstelle 116 durch unsymmetrische Ausbildung des Seilendes 122.

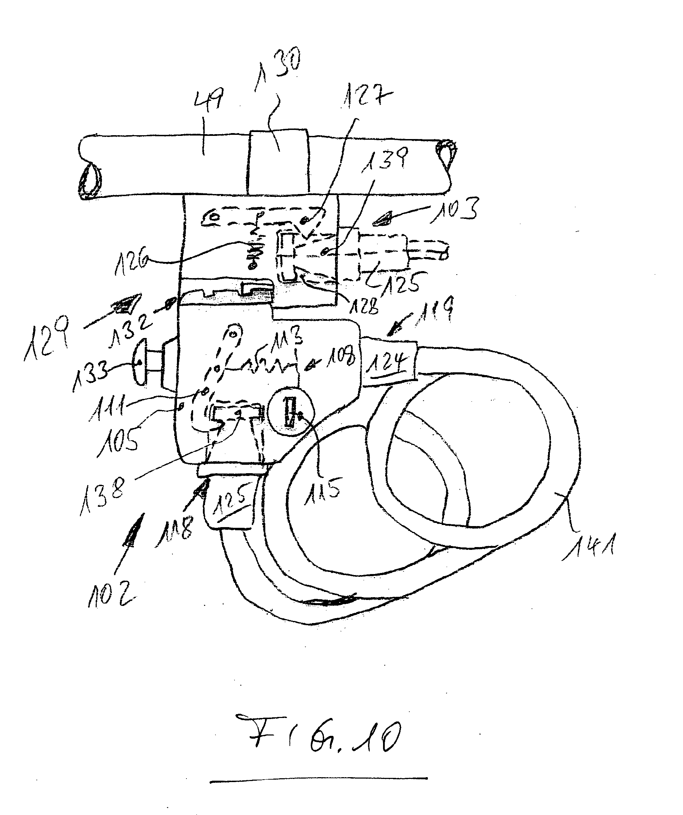

In der in Fig.10 gezeigten Ausführungsform eines Seilschlosses 102 wird ein Seilende 125 eines Seiles 141 alternativ in eine Anschlussstelle 118 an einem Schließkörper 105 für die Diebstahlsicherung verriegelt gehalten oder für den Transport in einer zweiten Aufnahme 103 an einer Befestigungsvorrichtung 129, die mit einer Schelle 130 am waagerechten Oberrohr eines Fahrradrahmens 49 befestigt ist, verrastet festgelegt. Der Schließkörper 105 des Seilschlosses 102 kann mit dem fest damit an der Anschlussstelle 119 verbundenen Seilende 124 im Bereich einer Schnellkupplung 132 von der Befestigungsvorrichtung 129 im Übrigen getrennt werden. Die Entriegelung der Schnellkupplung 132 erfolgt über eine Handhabe 133 am Schließkörper 105. Die Verriegelung des lösbaren Seilendes 125 in dem Schließkörper 105 erfolgt mit einem Schließmechanismus 108. Letzterer umfasst einen Schließriegel 111, der als Schnäpper ausgebildet ist und von einer Zugfeder 113 in seine Verriegelungsstellung gezogen wird. Gelöst wird die Verriegelung durch einen Schließzylinder 115, der in nicht gezeigter Weise auf den Schließriegel 110 einwirkt. Die alternative Festlegung des Seilendes 125 erfolgt im Rahmen einer zweiten Schließe in der Aufnahme 103 an der Befestigungsvorrichtung 129. Das Kopfstück 138 des Seilendes 125 ragt mit einem kegelstumpfförmigen, im Querschnitt runden Abschnitt 139 in die Befestigungsvorrichtung 129 an der zweiten Anschlussstelle 103 hinein. Das Seilende 125 schließt mit einem Kopfstück 138 ab. Zwischen dem Kopfstück 138 und dem kegelstumpfförmigen Abschnitt ist ein ringförmiger, zur Längsachse des Seilendes rechtwinkliger Hinterschnitt 128 ausgebildet, in den in der gezeigten Position in der Aufnahme 103 ein federbelasteter Schnäpper 127 eingreift. Eine Zugfeder 126 zieht den Schnäpper 127 in die gezeigte Verrastungsstellung für den Transport am Fahrradrahmen 49. Der Schnäpper 127 hat an seiner Eingriffstelle in den Hinterschnitt 128 einen vorstehenden Rastabschnitt mit zwei Rampen, die beim Einstecken des Seilendes 125 in die Aufnahme 103 und beim Herausziehen des Seilendes 125 über den Rand des Kopfstückes 138 hinwegrutschen, gegen die Kraft der Zugfeder 126. Der von dem Schnäpper 127 im Zusammenwirken mit der Feder 126 und den Schrägen an dem Schnäpper verursachte Widerstand gegen Herausziehen ist so ausgelegt, dass er vom Benutzer mit Handkraft überwunden werden kann.

Es kommt hinzu, dass die Aufnahme 103 horizontal ausgerichtet ist, mit seitlicher Öffnung zum Einstecken und Herausnehmen des Seilendes 125 in der verrasteten Festlegung. Deshalb spielt das Eigengewicht des Seilendes beim Transport an einem Fahrrad, unter Berücksichtigung der dabei zu erwartenden Erschütterungen bezüglich der Sicherheit der Transportverrastung keine Rolle.

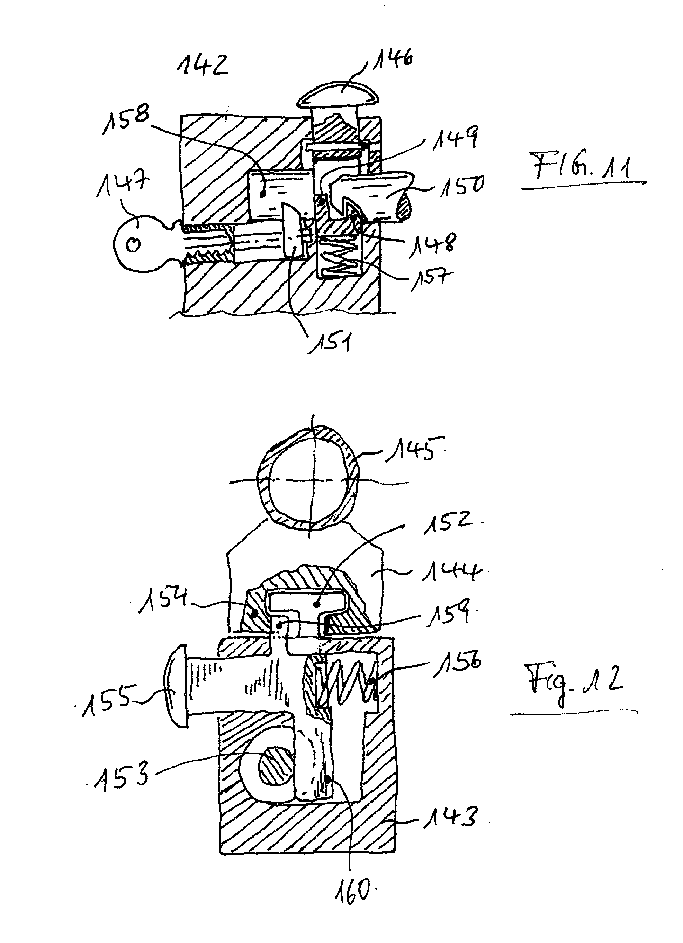

Fig.11 zeigt einen Schließkörper 142 eines Fahrrad-Bügelschlosses mit einem eingeführten Ringelementende 150, mit einer als Schieber mit von außen zugänglicher Taste ausgebildeten Schlosshandhabe 146 und mit einem Zylinderschloss mit Schlüssel 147. In der Einstecköffnung 158 wird das Ringelementende 150 präzise geführt. Zwei Riegel 151 und 148 ragen in die Einstecköffnung hinein. Der Riegel 148 ist an der Handhabe 146 ausgebildet und greift in eine Nut am Ringelementende 150 ein. Stirnseitig stößt das Ringelementende 150 in der gezeigten Transportverriegelungsstellung gegen einen an der Handhabe 146 ausgebildeten Anschlag 149 an. Diese Transportverriegelung lässt sich nur mit der Handhabe 146 öffnen. Zur Aktivierung der Sicherungsverriegelung wird der mit dem Schlüssel 147 zu betätigende Riegel 151 aus dem Profil der Einstecköffnung 158 geschwenkt, die Handhabe 146 wird gegen die Kraft einer Feder 157 weiter eingedrückt, so dass das Profil der Einstecköffnung 158 auch im Bereich der Handhabe 146 freigegeben wird und das Ringelementende 150 kann so bis ans Ende der Einstecköffnung 158 durchgeschoben werden. In dieser Lage kann der Riegel 151 in die Nut am Ringelementende 150 eingeschwenkt werden. Diese Sicherungsverriegelung lässt sich nur noch mit Schlüssel 147 öffnen. Damit ist gezeigt, dass ein Ringelementende 150 in ein und derselben Einstecköffnung 158 mit zwei unterschiedlichen Einstecktiefen von zwei unterschiedlichen Riegeln 148, 151 erfasst werden kann, wobei die Entriegelung in einem Fall nur mit dem Schlüssel 147 und im anderen Fall nur durch Betätigung der Handhabe 146 erfolgen kann. Wichtig dabei ist, dass sich der Kanal für die Schlosshandhabe 146 und für das Ringelementende im Schließkörper 142 schneiden.

Die in Fig.12 gezeigte Ausbildung einer durch eine Feder 156 in Verriegelungsstellung gedrückten Handhabe 155 in einem Schlosskörper 143 zeigt die Möglichkeit, mit der gleichen Handhabe 155 sowohl eine Verriegelung des Schlosskörpers 143 mit einem Fahrradhalter 144 für den Schlosskörper 143 an einem Fahrrad-Rahmenrohr 145 als auch die Transportverriegelung eines Ringelementendes 153 in dem Schließkörper 143 zu lösen. An der Handhabe 155 sind zwei Riegel 159, 160 ausgebildet, die zum einen, bei Betätigung der Handhabe 155 durch Eindrücken derselben, eine T-Nuten-Steckverbindung mit einem T-förmigen Anker 152 an dem Schließkörper 143 und einer T-Nut 154 an dem Schlosshalter 144 und zum anderen eine Steckverbindung mit einem Ringelementende 153 in demselben Schlosskörper 143 entriegeln. Alternativ kann, insbesondere bei einem Seilschloss, die Verriegelung in einem oder beiden Fällen durch eine Verrastung ersetzt werden. Insoweit wird auf die Darstellungen in den Fig.9 und Fig.10 (Rampe 106 in Fig.9 und Schnäpper 127 in Fig. 10.) verwiesen.

Alle beschriebenen oder bildlich dargestellten Merkmale bilden für sich oder in beliebiger sinnvoller Kombination den Gegenstand der Erfindung, auch unabhängig von ihrer Zusammenfassung in den Ansprüchen oder deren Rückbeziehung.

## Patentansprüche

1. a) Ringschloss (1, 2, 3) mit
b) einem Schließkörper (4, 5, 6) mit
c) einem Schließmechanismus (7, 8, 9) mit
d) einem Schließriegel (10, 11, 12, 13)
e) einem Schlüssel (14, 15)
f) zwei Anschlussstellen (16, 17;18, 19; 20, 21) für Ringelementenden (22, 23; 24,25; 26, 27; 88, 89)
g) einem Ringelement (28, 29, 30, 96),
h) mit zwei Enden (22, 23; 24,25; 26, 27; 88, 89)
i) von denen mindestens eines durch den Schließmechanismus (7, 8, 9) mit Schlüssel (14, 15) lösbar ist
j) einer Schlosshandhabe (32, 33)
k) die zur Entriegelung mindestens eines Ringelementendes (22, 24, 26) auf mindestens einen Riegel (10, 34, 35, 36) wirkt

2. Ringschloss nach Anspruch 1, **dadurch gekennzeichnet, dass** für ein lösbares Ringelementende (22, 23; 26; 88, 89; 125; 150) zwei wahlweise in Wirkung tretende Rückhalteelemente (34, 12, 11, 35; 13, 36; 91, 92, 90, 93; 111, 127; 148, 151) vorgesehen sind.

3. Ringschloss nach Anspruch 2, **dadurch gekennzeichnet, dass** ein Rückhalteelement (148; 160) für mindestens ein lösbares Ringelementende (150, 153) an der Schlosshandhabe (146; 155) vorgesehen ist.

4. Ringschloss nach Anspruch 2, **dadurch gekennzeichnet, dass** beiden Rückhalteelementen (148, 151) für das lösbare Ringelementende (150) je eine Stellung der Schlosshandhabe (146) zuzuordnen ist.

5. Ringschloss (2) nach einem der vorangegangenen Ansprüche, **gekennzeichnet durch** ein Warnsignal (37, 38) zur Anzeige der Scharfstellung des im Schließkörper (5) befindlichen Schließriegels (10).

6. Ringschloss (2) nach einem der vorangegangenen Ansprüche, **dadurch gekennzeichnet, dass** die Schlosshandhabe (32) am Schließkörper (5) angeordnet ist.

7. Ringschloss (1) nach einem der vorangehenden Ansprüche 1, 5 oder 6 **dadurch gekennzeichnet, dass** mindestens ein Ringelementende (22) für den Transport des Schlosses (1) und für die Schließfunktion des Schlosses (1) unterschiedlich in den Schließkörper (4) eingeführt wird.

8. Ringschloss (3) nach einem der vorangegangenen Ansprüche, **dadurch gekennzeichnet, dass** es Teile einer als Schnellkupplung (43) ausgebildeten Befestigungsvorrichtung (44) zum Transport an einem Fahrrad (41) umfasst.

9. Ringschloss (3) nach einem der vorangegangenen Ansprüche 15 bis 17, **dadurch gekennzeichnet, dass** eine Zweitschließe (46) für die Transportbefestigung mindestens eines Ringelementendes (26) vorgesehen ist.

10. Ringschloss (1) nach Anspruch 7, **dadurch gekennzeichnet, dass** mindestens ein Ringelementende (22) in zwei unterschiedlichen Einstecktiefen in dem Schließkörper (4) verriegelt werden kann.

11. Ringschloss (101) nach Anspruch 8 , **dadurch gekennzeichnet, dass** mindestens ein Ringelementende (122) für die Transportsituation und die Schließfunktion in unterschiedlichen Drehlagen in den Schließkörper (104) eingefügt wird.

12. Ringschloss nach Anspruch 10 in einer Ausführung als Bügelschloss mit zwei komplett lösbaren Bügelenden (88, 89), **dadurch gekennzeichnet, dass** mindestens eines von zwei Bügelenden (88, 89) durch Umsetzen des Bügels (96) um 180 deg gegenüber dem Schließkörper (87) und Austausch der Bügelenden (88, 89) in den Anschlussstellen am Schießkörper (87), verriegelt wird.

13. l) Seilschloss (101, 102) mit
m) einem Schließkörper (104, 105) mit
n) einem Schließmechanismus (107, 108) mit
o) einem Schließriegel (110, 111)
p) einem Schlüsselloch (114, 115)
q) zwei Anschlussstellen (116, 117;118, 119) für Seilenden (122, 123; 124,125)
r) einem Seil (128, 129),
s) mit zwei Enden (122, 123; 124,125)
t) von denen mindestens eines durch den Schließmechanismus (107, 108) mit Schlüsselloch (114, 115) lösbar ist
u) einer Aufnahme (116, 103) für ein Seilende (122, 125)
v) mit Mitteln (106, 110, 112; 126, 127, 128) zum Verrasten des Seilendes (122; 125) in der Aufnahme (116, 103)

14. Seilschloss (101, 102) nach Anspruch 13, **gekennzeichnet durch** eine Befestigungsvorrichtung (129) für die Befestigung an einem Fahrradrahmen (49), wobei die Befestigungsvorrichtung (129) vorzugsweise eine Schnellkupplung (132) umfasst.

15. Seilschloss nach Anspruch 14, **gekennzeichnet durch** eine gemeinsame Handhabe (155) zum Trennen der Schnellkupplung und zum Entsperren des ohne Schlüssel lösbaren Ringelementendes (153).
